(19) Europäisches Patentamt
European Patent Office
Office européen des brevets

(11) Veröffentlichungsnummer: **0 081 459**
**B1**

(12) # EUROPÄISCHE PATENTSCHRIFT

(45) Veröffentlichungstag der Patentschrift: **19.06.85**

(51) Int. Cl.⁴: **C 07 F 9/38**

(21) Anmeldenummer: **82810512.2**

(22) Anmeldetag: **30.11.82**

(54) **Verfahren zur Herstellung von N-Phosphonomethylglycin.**

(30) Priorität: **03.12.81 US 327138**
**24.06.82 US 391816**
**19.11.82 US 442933**

(43) Veröffentlichungstag der Anmeldung:
**15.06.83 Patentblatt 83/24**

(45) Bekanntmachung des Hinweises auf die Patenterteilung:
**19.06.85 Patentblatt 85/25**

(84) Benannte Vertragsstaaten:
**AT BE CH DE FR GB IT LI NL SE**

(56) Entgegenhaltungen:
**DE - A - 2 555 572**
**DE - A - 2 555 573**

(73) Patentinhaber: **CIBA-GEIGY AG, Postfach, CH-4002 Basel (CH)**

(72) Erfinder: **Moser, Hans, Dr., Blumenrain 3, CH-4312 Magden (CH)**

**EP 0 081 459 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft ein neues Verfahren zur Herstellung von N-Phosphonomethylglycin der Formel I

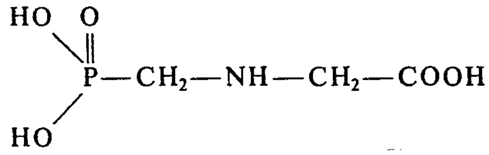

(I)

durch Umsetzung von Aminomethanphosphonsäure mit Glyoxal in wäßrigem Medium in Gegenwart von Schwefeldioxid.

N-Phosphonomethylglycin ist ein Herbizid mit einem sehr breiten Spektrum, das nur wenig oder gar keine Resteffekte aufweist. Seine Herstellung und Verwendung ist in US-Patent 3 799 758 beschrieben.

Es ist bekannt, daß bei der Umsetzung von Glycin, Formaldehyd und phosphoriger Säure im Molverhältnis 1 : 1 : 1 anstelle des gewünschten N-Phosphonomethylglycins in der Hauptsache N,N-Bis-Phosphonomethylglycin gebildet wird (vgl. US-PS 3 956 370). Dieses Produkt läßt sich dann elektrolytisch (US-PS 3 835 000) in Phosphonomethylglycin überführen.

Um die mit dem vorgenannten Verfahren verbundenen Schwierigkeiten zu überwinden, wurde auch bereits vorgeschlagen, N-Phosphonomethylglycin in der Weise herzustellen, daß man zunächst ein N-substituiertes Glycin mit Formaldehyd und phosphoriger Säure zum entsprechenden N-substituierten N-Phosphonomethylglycin umsetzt und aus diesem dann anschließend den ursprünglich vorhandenen Substituenten am Stickstoff abspaltet. So wird beispielsweise im US-Patent 3 956 370 die Herstellung von N-Phosphonomethylglycin durch Umsetzung von N-Benzyläthylglycinat mit Formaldehyd und phosphoriger Säure unter gleichzeitiger Hydrolyse der Estergruppe zu N-Benzyl-N-phosphonomethylglycin und anschließende Abspaltung der Benzylgruppe als Benzylbromid mit starker Bromwasserstoffsäure beschrieben. Auf diese Weise wird N-Phosphonomethylglycin in einer Ausbeute von etwa 40% erhalten. Dieses Verfahren ist wegen der niedrigen Ausbeute und im Hinblick auf die lacrimatorische Wirkung des als Nebenprodukt gebildeten Benzylbromids für eine technische Herstellung von N-Phosphonomethylglycin nicht vorteilhaft.

Weitere Verfahren zur Herstellung von N-Phosphonomethylglycin bestehen darin, daß man Aminomethylphosphonsäureverbindungen mit Glyoxal kondensiert und das entstehende Carbonylaldiminmethanphosphonat hydriert, wobei das Kondensationsprodukt jedoch vor der Hydrierstufe oder danach mit oxidierenden Mitteln behandelt werden muß (DE-A-2 555 572, DE-A-2 555 573). Diese Verfahren sind jedoch für eine Durchführung in technischem Umfang zu umständlich.

Es ist daher das Ziel der vorliegenden Erfindung, ein Verfahren einfaches bereitzustellen, durch das N-Phosphonomethylglycin in guter Ausbeute und unter Bildung leicht zu handhabender umweltfreundlicher Nebenprodukte hergestellt werden kann.

Erfindungsgemäß wird vorgeschlagen, N-Phosphonomethylglycin in der Weise herzustellen, daß man Aminomethanphosphonsäure der Formel II

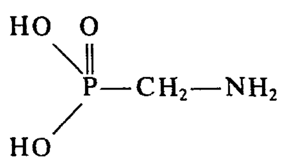

(II)

in wäßrigem Medium mit Glyoxal der Formel III

$$OHC\text{-}CHO \qquad \text{(III)}$$

in Gegenwart von Schwefeldioxid umsetzt und das Produkt isoliert.

Für die Durchführung des erfindungsgemäßen Verfahrens gibt es zwei bevorzugte Ausführungsformen:

Bei der ersten bevorzugten Verfahrensweise wird die Aminomethanphosphonsäure und Glyoxal in Wasser suspendiert und anschließend Schwefeldioxid in die Suspension eingeleitet.

Bei dieser Umsetzung kann die Einleitung des Schwefeldioxid-Gases mit oder ohne Kühlung der Reaktionslösung erfolgen. Vorteilhafterweise kühlt man jedoch das Reaktionsgemisch während des Einleitungsvorganges auf 0—30° C, insbesondere auf 5—20° C.

Die eingeleitete Gasmenge an Schwefeldioxid wird so bemessen, daß im Minimum bis zur Klärung der Suspension und im Maximum bis zur Sättigung des Gemisches Schwefeldioxid zugesetzt wird. Vorteilhaft ist die Sättigung der Reaktionslösung mit Schwefeldioxid.

Bei der zweiten bevorzugten Verfahrensweise wird die Aminomethanphosphonsäure im Wasser suspendiert und anschließend gleichzeitig das Glyoxal und das Schwefeldioxid-Gas eingeleitet.

Bei dieser Verfahrensweise erfolgt der Zusatz von Glyoxal und Schwefeldioxid vorzugsweise zu einer vorgewärmten Suspension von Aminomethanphosphonsäure. Die Temperatur der Suspension beträgt vorzugsweise 30—90° C, insbesondere 35—75° C.

Die Menge an Schwefeldioxid, die bei diesem Umsetzungstyp verwendet wird, kann kleiner sein als die Menge, die notwendig ist um das Bis-Addukt mit Glyoxal zu liefern. Bevorzugt ist eine Schwefeldioxidmenge von 0,3—0,5 Mol pro Mol Glyoxal. Ganz besonders bevorzugt ist eine Menge von 0,5—1,5 Mol Schwefeldioxid-Gas pro Mol Glyoxal.

Nach Beendigung der Schwefeldioxideinleitung, bzw. des Zusatzes von Glyoxal und Schwefeldioxid, wird die Lösung auf Temperaturen von 60—120° C erhitzt. Vorteilhaft ist eine Temperatur zwischen 85° C und der Siedetemperatur des Reaktionsgemisches. Dabei wird die Reaktionslösung für Zeiträume von 5—120 Minuten erhitzt. Vorteilhaft sind Reaktionszeiten von 15—60 Minuten und, insbesondere von 20—40 Minuten. Beim Erhitzen wird das eingeleitete Schwefeldioxid-Gas wieder freigesetzt und kann zurückgewonnen werden.

Das verwendete Glyoxal kann sowohl als wäßrige Lösung des Monomers als auch als Polymer in die erfindungsgemäße Reaktion eingesetzt werden.

Zur Erzielung einer hohen Ausbeute ist es von Vorteil, die verwendete Wassermenge möglichst klein zu halten, da das Reaktionsprodukt in Wasser löslich ist. Insbesondere kann bei Verwendung von verdünnten wäßrigen Lösungen von Glyoxal auf den weiteren Zusatz von Wasser als Lösungsmittel verzichtet werden.

Anstelle von Schwefeldioxid-Gas kann bei der erfindungsgemäßen Reaktion das Schwefeldioxid auch in gebundener Form eingesetzt werden. Hierfür eignen sich besonders Alkali- und Erdalkalisalze der schwefeligen Säure, insbesondere Natrium-, Kalium- oder Calciumhydrogensulfit.

Wird das Verfahren in der Weise durchgeführt, daß das Glyoxal zur Suspension von Aminomethanphosphonsäure und einem Alkalihydrogensulfit zugesetzt wird, so können sehr kleine Mengen des Hydrogensulfits zugesetzt werden. So wird die Ausbeute selbst bei Mengen von weniger als 0,05 Mol Natriumhydrogensulfit pro Mol Glyoxal nicht dramatisch vermindert. In diesem Fall ist ein Erhitzen der Reaktionsmischung auf Temperaturen über 75° C nicht ratsam um die Entwicklung von Schwefeldioxid-Gas zu vermeiden, die die Reaktion beendigen würde bevor ein nennenswerter Umsatz des Ausgangsmaterials stattgefunden hat. Die Reaktion läuft auch noch bei Konzentrationen von 0,01 Mol Alkalihydrogensulfit pro Mol Glyoxal ab, jedoch werden die Reaktionsgeschwindigkeiten mit abnehmenden Konzentrationen langsamer. Werden niedrige Konzentrationen von Alkalihydrogensulfit verwendet, können die Reaktionszeiten bis zu 3 Stunden betragen.

Weiter sind für die erfindungsgemäße Reaktions auch Addukte von Glyoxal und schwefeliger Säure, bzw. deren Salzen, als Ausgangsprodukte verwendbar. In besonderer Weise ist hierfür das im Handel befindliche Glyoxal-bis-(natriumhydrogensulfit) Hydrat geeignet.

Die Substitution von Schwefeldioxid durch seine Salze oder deren Reaktionsprodukte mit Glyoxal ist wegen der einfacheren Handhabung für die labormäßige Ausführung des erfindungsgemäßen Verfahrens vorteilhaft, jedoch ist bei der technischen Ausführung aus Kostengründen die Verwendung von Schwefeldioxid-Gas insbesondere auch deshalb von Vorteil, weil das bei der Reaktion wieder freigesetzte Schwefeldioxid zurückgewonnen und bei der Reaktion des folgenden Reaktionsansatzes weiterverwendet werden kann.

Eine vorteilhafte Ausführungsform des erfindungsgemäßen Verfahrens besteht darin, daß man bei 5—90° C die Suspension von Aminomethanphosphonsäure und Glyoxal in Wasser mit Schwefeldioxid sättigt, die entstandene Lösung für 20—40 Minuten auf 85—105° C erhitzt und durch Kristallisation das Produkt isoliert.

Eine weitere vorteilhafte Ausführungsform des erfindungsgemäßen Verfahrens besteht darin, daß man bei 30—90° C in eine Suspension von Aminomethanphosphonsäure gleichzeitig Glyoxal und Schwefeldioxid einleitet, die entstandene Lösung für 20—40 Minuten auf 85—105° C erwärmt und das Produkt durch Kristallisation isoliert.

Eine dritte vorteilhafte Ausführungsform des erfindungsgemäßen Verfahrens besteht darin, daß man bei Temperaturen von höchstens 75° C das Glyoxal zu einer Suspension von Aminomethanphosphonsäure und mindestens 0,01 Mol Alkalihydrogensulfit zusetzt, die entstandene Mischung für 0,5—3 Stunden auf Temperaturen von höchstenas 75° C erwärmt und das Produkt durch Kristallisation isoliert.

In der Regel werden die Reaktionspartner Aminomethanphosphonsäure und Glyoxal äquimolar zur Reaktion gebracht.

Die anschließenden Beispiele dienen der näheren Erläuterung der vorleigenden Erfindung.

## Beispiel 1

In eine Suspension von 11,1 g (0,1 Mol) Aminomethanphosphonsäure und 11,4 ml (0,1 Mol) 40%igem wäßrigem Glyoxal in 40 ml Wasser wird unter kräftigem Rühren unter Kühlung bei 10—15° C so lange Schwefeldioxid-Gas eingeleitet, bis eine klare Lösung entstanden ist. Nach weiterem Rühren bei Raumtemperatur für 0,5 Stunden wird die Lösung für 0,5 Stunden zum Rückfluß erhitzt. Hierbei tritt

eine starke Schwefeldioxidabgabe auf und die Lösung verfärbt sich dunkelbraun. Danach wird die Reaktionsmischung auf 5° C abgekühlt, der entstandene Niederschlag abgetrennt, mit wenig Eiswasser gewaschen und aus Wasser umkristallisiert. Man erhält so 81, g (48%) reines N-Phosphonomethylglycin, Zers. 236° C.

Beispiel 2

Eine Suspension von 11,1 (0,1 Mol) Aminomethanphosphonsäure und 7,2 g (0,1 Mol) 80%iges polymeres Glyoxal in 40 ml Wasser werden gemäß Beispiel 1 mit Schwefeldioxid behandelt und aufgearbeitet. Ausbeute: 7,7 g (45,5%) N-Phosphonomethylglycin, Zers. 244° C.

Beispiel 3

In eine Suspension von 11,1 g (0,1 Mol) Aminomethanphosphonsäure und 7,2 g (0,1 Mol) 80%igem polymerem Glyoxal in 40 ml Wasser wird ohne Kühlung unter kräftigem Rühren bis zur Sättigung Schwefeldioxid-Gas eingeleitet. Die Lösung verfärbt sich gelb-orange und die Temperatur steigt auf 42° C an. Die Lösung wird anschließend gerührt und zum Rückfluß erhitzt. Dabei vertieft sich die Färbung der Lösung nach dunkelbraun. Die Lösung wird heiß filtriert und danach auf 5° C abgekühlt, der Niederschlag abgetrennt, mit wenig eiskaltem Wasser gewaschen und getrocknet. Man erhält so 10,6 g (62,8%) N-Phosphonomethylglycin, Zers. 235° C.

Beispiel 4

Eine Suspension von 15,6 g (0,055 Mol) Glyoxal-bis-(natriumhydrogensulfit) Hydrat und 30 ml Wasser werden unter Rühren zum Rückfluß erhitzt. Bei Erreichen einer Temperatur von 85° C setzt Schwefeldioxidentwicklung ein und es entsteht eine klare Lösung, die für 40 Minuten am Rückfluß gekocht wird. Nach Abkühlen auf Raumtemperatur wird das Reaktionsgemisch mit 11 ml (0,11 Mol) 32%iger Salzsäure versetzt und eingedampft. Der ölige Rückstand wird mit 40 ml 36%iger Salzsäure verrieben, das ausgefallene Salz wird abgetrennt und die Lösung erneut eingedampft. Das erhaltene Öl wird durch Versetzen mit 150 ml Aethanol kristallisiert. Diese Suspension wird durch Zusatz von Propenoxid gegen Kongorot neutralisiert. Der Niederschlag wird abgetrennt, mit Aethanol gewaschen und getrocknet. Durch Umkristallisieren aus Wasser erhält man 4,5 g (53,2%) N-Phosphonomethylglycin, Zers. 228° C.

Beispiel 5

Eine Suspension von 22,2 g (0,2 Mol) Aminomethanphosphonsäure und 58 g (0,2 Mol) Glyoxal-bis-(Natriumhydrogensulfit) Hydrat in 80 g wäßriger 5 N Salzsäure wird unter Rühren langsam auf 95° C aufgeheizt. Beim Erreichen einer Innentemperatur von 70° C tritt eine starke Entwicklung von Schwefeldioxid auf und die Lösung färbt sich bräunlich. Nach dem Abklingen der Gasentwicklung wird die Reaktionsmischung für 0,5 Stunden am Rückfluß gekocht und dann langsam bis auf 0° C abgekühlt. Der ausgefallene Niederschlag wird abfiltriert, mit Eiswasser und Aceton gewaschen und getrocknet. Man erhält so 20,2 g (59,8%) N-Phosphonomethylglycin, Zers. 236° C.

Beispiel 6

In einer Suspension von 44,4 g (0,4 Mol) Aminomethanphosphonsäure in 160 ml Wasser werden bei einer Temperatur von 40° C 26 g (0,4 Mol) Schwefeldioxid-Gas und 58 g einer 40%igen wäßrigen Glyoxallösung (0,4 Mol) gleichzeitig eingeleitet. Die erhaltene Lösung wird für 30 Minuten am Rückfluß gekocht, wobei eine Schwefeldioxidentwicklung auftritt. Danach wird die Lösung auf 5° C abgekühlt, der gebildete Niederschlag wird abgetrennt und mit einer kleinen Menge Eiswasser gewaschen und getrocknet. Man erhält 44 g (65%) N-Phosphonomethylglycin, Zers. $>$ 250° C.

Beispiel 7

In eine Suspension von 44,4 g (0,4 Mol) Aminomethanphosphonsäure in 160 ml Wasser werden bei 60° C 26 g (0,4 Mol) Schwefeldioxid-Gas und 58 g einer 40%igen Lösung von Glyoxal (0,04 Mol) gleichzeitig eingeleitet. Die entstandene Lösung wird für 30 Minuten am Rückfluß gekocht, wobei eine Entwicklung von Schwefeldioxid auftritt. Dann wird die Lösung auf 5° C abgekühlt, der entstandene Niederschlag abgetrennt, mit einer kleinen Menge Eiswasser gewaschen und getrocknet. Man erhält 50 g (74%) N-Phosphonomethylglycin, Zers. $>$ 250° C.

Beispiel 8

In einer Suspension von 44,4 g (0,4 Mol) Aminomethanphosphonsäure in 160 ml Wasser werden bei 60°C gleichzeitig 13 g (0,2 Mol) Schwefeldioxid-Gas und 58 g einer 40%igen Lösung von Glyoxal (0,4 Mol) eingeleitet. Die entstandene Lösung wird für 30 Minuten am Rückfluß gekocht, wobei Schwefeldioxid-Gas entwickelt wird. Danach wird die Lösung auf 5°C abgekühlt, der entstandene Niederschlag abgetrennt, mit wenig Eiswasser gewaschen und getrocknet. Man erhält so 50 g (74%) N-Phosphonomethylglycin, Zers. > 250°C.

Beispiel 9

Einer Lösung von 37,1 g (0,334 Mol) Aminomethanphosphonsäure und 2,6 g (0,016 Mol) Natriumhydrogensulfit in 150 ml Wasser werden bei einer Temperatur von 60°C tropfenweise 50,5 g einer 40%igen wässerigen Lösung von Glyoxal (0,334 Mol) zugesetzt. Die Mischung wird bei der gleichen Temperatur für 1 Stunde gerührt und dann auf 5°C abgekühlt. Der entstandene Niederschlag wird abgetrennt, mit wenig Eiswasser gewaschen und getrocknet. Man erhält so 37,6 g (67%) N-Phosphonomethylglycin, Zers. > 250°C.

**Patentansprüche**

1. Verfahren zur Herstellung von N-Phosphonomethylglycin der Formel I

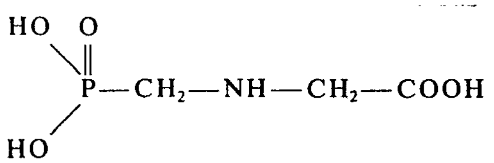

(I)

durch Umsetzung von Aminomethanphosphonsäure der Formel II

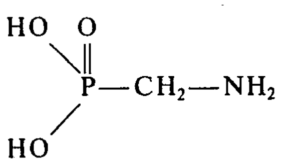

(II)

mit Glyoxal der Formel III

OHC—CHO

dadurch gekennzeichnet, daß man die Umsetzung in wäßrigem Medium in Gegenwart von Schwefeldioxid durchführt und das Produkt isoliert.

2. Verfahren gemäß Anspruch 1, dadurch gekennzeichnet, daß man das Schwefeldioxid in eine Suspension von Aminomethanphosphonsäure und Glyoxal in Wasser einleitet.

3.Verfahren gemäß einem der Ansprüche 1 oder 2, dadurch gekennzeichnet, daß die Schwefeldioxidmenge im Minimum so bemessen ist, daß eine klare Lösung resultiert.

4. Verfahren gemäß Anspruch 3, dadurch gekennzeichnet, daß das Reaktionsgemisch mit Schwefeldioxid gesättigt ist.

5. Verfahren gemäß Anspruch 1, dadurch gekennzeichnet, daß das Reaktionsgemisch auf 60—120°C erhitzt wird.

6. Verfahren gemäß Anspruch 5, dadurch gekennzeichnet, daß die Temperatur zwischen 85°C und der Siedetemperatur des Reaktionsgemisches liegt.

7. Verfahren gemäß Anspruch 1, dadurch gekennzeichnet, daß eine wäßrige Lösung von monomerem oder polymerem Glyoxal verwendet wird.

8. Verfahren gemäß Anspruch 5, dadurch gekennzeichnet, daß man die Lösung für 5 bis 120 Minuten erhitzt.

9. Verfahren gemäß Anspruch 1, dadurch gekennzeichnet, daß man das Schwefeldioxid in gebundener Form einsetzt.

10. Verfahren gemäß Anspruch 9, dadurch gekennzeichnet, daß man das Schwefeldioxid als Natrium-, Kalium- oder Calciumhydrogensulfit oder zusammen mit dem Glyoxal als Glyoxal-bis-(natrium-, kalium- oder calciumhydrogensulfit) einsetzt.

11. Verfahren gemäß Anspruch 1, dadurch gekennzeichnet, daß man bei 5—20°C eine Suspension von Aminomethanphosphonsäure und Glyoxal in Wasser mit Schwefeldioxid sättigt und die entstandene Lösung für 20—40 Minuten auf 85—105°C erhitzt und das Produkt durch Kristallisation isoliert.

12. Verfahren gemäß Anspruch 1, dadurch gekennzeichnet, daß das Schwefeldioxid und das Glyoxal gleichzeitig einer Suspension von Aminomethanphosphonsäure in Wasser zugesetzt werden.

13. Verfahren gemäß Anspruch 12, dadurch gekennzeichnet, daß die Suspension von Aminomethanphosphonsäure auf 30—90° C vorgewärmt ist.

14. Verfahren gemäß Anspruch 13, dadurch gekennzeichnet, daß die Suspension von Aminomethanphosphonsäure auf 35—75° C vorgewärmt ist.

15. Verfahren gemäß Anspruch 12, dadurch gekennzeichnet, daß pro Mol Glyoxal weniger als 2 Mol Schwefeldioxid verwendet werden.

16. Verfahren gemäß Anspruch 15, dadurch gekennzeichnet, daß die verwendete Menge Schwefeldioxid 0,3 bis 1,5 Mol pro Mol Glyoxal ist.

17. Verfahren gemäß Anspruch 1, dadurch gekennzeichnet, daß das Glyoxal einer Suspension von Aminomethanphosphonsäure und einem Alkalihydrogensulfit zugesetzt wird.

18. Verfahren gemäß Anspruch 17, dadurch gekennzeichnet, daß mindestens 0,01 Mol Alkalihydrogensulfit pro Mol Glyoxal verwendet werden.

19. Verfahren gemäß Anspruch 17, dadurch gekennzeichnet, daß die Reaktionsmischung auf höchstens 75° C erwärmt wird.

20. Verfahren gemäß Anspruch 12, dadurch gekennzeichnet, daß das Reaktionsgemisch auf 60—120° C erwärmt wird.

21. Verfahren gemäß Anspruch 1, dadurch gekennzeichnet, daß das Schwefeldioxid und das Glyoxal bei 30—90° C gleichzeitig zur Suspension von Aminomethanphosphonsäure zugesetzt werden, die entstandene Lösung für 20 bis 40 Minuten auf 85—105° C erwärmt wird und das Produkt durch Kristallisation isliert wird.

22. Verfahren gemäß Anspruch 1, dadurch gekennzeichnet, daß das Glyoxal bei Temperaturen von höchstens 75° C zu einer Suspension von Aminomethanphosphonsäure und mindestens 0,01 Mol Alkalihydrogensulfit zugesetzt wird, die Mischung für 0,5 bis 3 Stunden auf höchstens 75° C erwärmt wird und das Produkt durch Kristallisation isoliert wird.

**Claims**

1. A process for the preparation of N-phosphonomethylglycine of the formula I

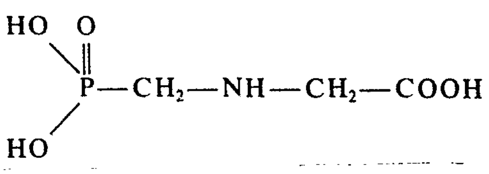

(I)

by reacting aminomethanephosphonic acid of the formula II

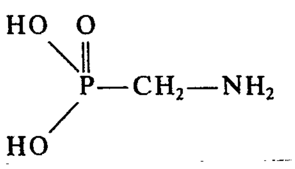

(II)

with glyoxal of the formula III

OHC—CHO (III)

which process comprises carrying out the reaction in an aqueous medium, in the presence of sulfur dioxide, and isolating the resultant product.

2. A process according to claim 1, wherein the sulfur dioxide is introduced into a suspension of aminomethanephosphonic acid and glyoxal in water.

3. A process according to either of claims 1 or 2, wherein the minimum amont of sulfur dioxide is such that a clear solution is formed.

4. A process according to claim 3, wherein the reaction mixture is saturated with sulfur dioxide.

5. A process according to claim 1, wherein the reaction mixture is heated to 60—120° C.

6. A process according to claim 5, wherein the temperature is in the range from 85° C top the boiling temperature of the reaction mixture.

7. A process according to claim 1, wherein an aqueous solution of monomeric or polymeric glyoxal is used

8. A process according to claim 5, wherein the solution is heated for 5 to 120 minutes.

9. A process according to claim 12, wherein the sulfur dioxide is used in the bound form.

10. A process according to claim 9, wherein the sulfur dioxide is used in the form of sodium

hydrogen sulfite, potassium hydrogen sulfite or calcium hydrogen sulfite or, together with glyoxal, in the form of glyoxal-bis-sodium, potassium or calcium hydrogen sulfite.

11. A process according to claim 1, wherein a suspension of aminomethanephosphonic acid and glyoxal in water is saturated at 5—20° C with sulfur dioxide, the resultant solution is heated for 20 to 40 minutes to 85—105° C, and the product is isolated by crystallisation.

12. A process according to claim 1, wherein the sulfur dioxide and the glyoxal are simultaneously introduced into a suspension of aminomethanephosphonic acid in water.

13. A process according to claim 12, wherein the suspension of aminomethanephosphonic acid is preheated to 30—90° C.

14. A process according to claim 13, wherein the suspension of aminomethanephosphonic acid is preheated to 35—75° C.

15. A process according to claim 12, wherein the amount of sulfur dioxide employed is less than 2 moles per mole of glyoxal.

16. A process according to claim 15, wherein the amount of sulfur dioxide employed is 0.3 to 1.5 moles per mole of glyoxal.

17. A process according to claim 1, wherein glyoxal is added to a suspension of aminomethanephosphonic acid and an alkali metal hydrogen sulfite.

18. A process according to claim 17, wherein the amount of alkali metal hydrogen sulfite is at least 0.01 mole per mole of glyoxal.

19. A process according to claim 17, wherein the reaction mixture is heated to a temperature not exceeding 75° C.

20. A process according to claim 12, wherein the reaction mixture is heated to 60—120° C.

21. A process according to claim 1, wherein sulfur dioxide and glyoxal are added simultaneously to a suspension of aminomethanephosphonic acid at 30—90° C, the resultant solution is heated for 20 to 40 minutes to 85—105° C, and the product is isolated by crystallisation.

22. A process according to claim 12, wherein glyoxal is added at a temperature not exceeding 75° C to a suspension of aminomethanephosphonic acid and at least 0.01 mole of alkali metal hydrogen sulfite, the mixture is heated for 0.5 to 3 hours to a temperature not exceeding 75° C, and the product is isolated by crystallisation.

**Revendications**

1. Procédé de préparation de N-phosphonométhylglycine de formule I

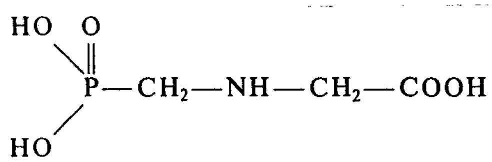

(I)

par réaction d'acide aminométhanephosphonique de formule II

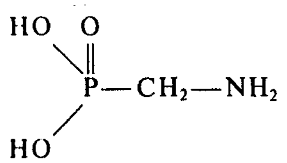

(II)

avecdu glyoxal de formule III

OHC—CHO

caractérisé en ce qu'on conduit la réaction en milieu aqueux en présence de dioxyde de soufre et en ce qu'on isole le produit.

2. Procédé selon la revendication 1, caractérisé en ce qu'on introduit le dioxyde de soufre dans une suspension d'acide aminométhanephosphonique e de glyoxal dans l'eau.

3. Procédé selon l'une des revendications 1 et 2, caractérisé en ce que la quantité de dioxyde de soufre est mesurée au minimum de manière qu'on obtienne une solution claire.

4. Procédé selon la revendication 3, caractérisé en ce que le mélange réactionnel est saturé avec du dioxyde de soufre.

5. Procédé selon la revendication 1, caractérisé en ce qu'on chauffe le mélange réactionnel à 60—120° C.

6. Procédé selon la revendication 5, caractérisé en ce que la température se situe entre 85° C et la température d'ébullition du mélange réactionnel.

7. Procédé selon la revendication 1, caractérisé en ce qu'on utilise une solution aqueuse de glyoxal monomère ou polymère.

8. Procédé selon la revendication 5, caractérisé en ce qu'on chauffe la solution pendant 5 à 120 minutes.

9. Procédé selon la revendication 12, caractérisé en ce qu'on utilise le dioxyde de soufre sous forme liée.

10. Procédé selon la revendication 9, caractérisé en ce qu'on utilise le dioxyde de soufre sous forme de sulfite acide de sodium, de potassium ou de calcium ou ensemble avec le glyoxal sous forme de glyoxal-bis-(sulfite acide de sodium, de potassium ou de calcium.

11. Procédé selon la revendication 1, caractérisé en ce qu'on sature à 5—20°C une suspension d'acide aminométhanephosphonique et de glyoxal dans l'eau avec du dioxyde de soufre, en ce qu'on chauffe la solution apparue pendant 20 à 40 minutes à 85—105°C et en ce qu'on isole le produit par cristallisation.

12. Procédé selon la revendication 1, caractérisé en ce qu'on ajoute simultanément le dioxyde de soufre et le glyoxal à une suspension d'acide aminométhanephosphonique dans l'eau.

13. Procédé selon la revendication 12, caractérisé en ce qu'on pré-chauffe la suspension d'acide aminométhanephosphonique à 30—90°C.

14. Procédé selon la revendication 12, caractérisé en ce qu'on pré-chauffe la suspension d'acide aminométhanephosphonique à 35—75°C.

15. Procédé selon la revendication 12, caractérisé en ce qu'on utilise par mole de glyoxal moins de 2 moles de dioxyde de soufre (anhydride sulfureux).

16. Procédé selon la revendication 15, caractérisé en ce que laquantité d'anhydride sulfureux utilisée est de 0,3 à 1,5 mole par mole de glyoxal.

17. Procédé selon la revendication 1, caractérisé en ce qu'on ajoute le glyoxal à une suspension d'acide aminométhanephosphonique et un sulfite acide alcalin.

18. Procédé selon la revendication 17, caractérisé en ce qu'on utilise au moins 0,01 Mole de sulfite acide alcalin par mole de glyoxal.

19. Procédé selon la revendication 17, caractérisé en ce qu'on chauffe le mélange réactionnel à au plus 75°C.

20. Procédé selon la revendication 12, caractérisé en ce qu'on chauffe le mélange réactionnel à 60—120°C.

21. Procédé selon la revendication 1, caractérisé en ce qu'on ajoute simultanément l'anhydride sulfureux et le glyoxal à 30—90°C à la suspension d'acide aminométhanephosphonique, en ce qu'on chauffe la solution apparue pendant 20 à 40 minutes à 85—105°C et en ce qu'on isole le produit par cristallisation.

22. Procédé selon la revendication 1, caractérisé en ce qu'on ajoute le glyoxal à des températures d'au plus 75°C à une suspension d'acide aminométhanephosphonique et au moins 0,01 mole de sulfite acide alcalin, en ce qu'on chauffe le mélange pendant 0,5 à 3 h à au plus 75°C et en ce qu'on isole le produit par cristallisation.